# EUROPEAN PATENT SPECIFICATION

(11) **EP 3 560 670 B1**
(45) Date of publication and mention of the grant of the patent: **13.10.2021**
(21) Application number: 19170939.3
(22) Date of filing: 24.04.2019
(51) Int. Cl.: B29C 33/62, C09D 127/18, C23C 22/34, C08K 3/22, C08K 7/00

(54) **PTFE-BASED COATING FOR MOULDS OF ALUMINIUM ALLOYS USED IN RUBBER VULCANIZATION FOR TIRE PRODUCTION AND METHOD OF PRODUCTION THEREOF**
BESCHICHTUNG AUF PTFE-BASIS FÜR FORMEN AUS ALUMINIUMLEGIERUNGEN ZUR KAUTSCHUKVULKANISIERUNG FÜR DIE REIFENHERSTELLUNG UND ENTSPRECHENDES HERSTELLUNGSVERFAHREN
PEINTURES À BASE DE PTFE POUR DES MOULES EN ALLIAGES D'ALUMINIUM POUR LA VULCANISATION DE CAOUTCHOUC DANS LA FABRICATION DES PNEUS ET LEUR PROCÉDÉ DE FABRICATION

(30) Priority: 25.04.2018 CZ 20180200; 23.04.2019 CZ 20190250
(43) Date of publication of application: 30.10.2019
(73) Proprietor: Univerzita J. E. Purkyne v Usti nad Labem, 400 96 Usti nad Labem (CZ)
(72) Inventor: MICHNA, Stefan, 40711 Decin (CZ); LYSONKOVA, Irena, 27711 Libis (CZ); NOVOTNY, Jan, 40011 Usti nad Labem (CZ); CAIS, Jaromir, 36235 Abertamy (CZ)
(74) Representative: Kratochvil, Vaclav

(56) References cited:
- CN-A- 104 673 069
- US-A1- 2017 321 070
- I. Milosev ET AL: "Review - Conversion Coatings based on Zirconium and/or Titanium", Journal of the Electrochemical Society Journal of the Electrochemical Society, vol. 165, no. 3 18 February 2018 (2018-02-18), pages C127-C144, XP055595928, Retrieved from the Internet: URL:https://www.researchgate.net/publicati on/323254037_Review-Conversion_Coatings_Ba sed_on_Zirconium_andor_Titanium/download [retrieved on 2019-06-12]

## Description

### Field of the Invention

The present invention relates to the protection of the working surface area of mould segments used for rubber vulcanization for tire production in the automotive industry.

### Background of the Invention

Nowadays, PTFE coatings are used to coat working surface area of mould segments used for rubber vulcanization for tire production in the automotive industry. The moulds are made of an Al-Si alloy. The PTFE coating is used inside the mould to reduce adhesion. Due to the lower mould adhesion, the mould does not need to be cleaned so often.

Nowadays, aluminium alloys, in particular of Al-Si and Al-Mg type, are used to produce the mould segments. These moulds consist of 8 to 36 segments, which are combined into the desired shape of the final product prior to the vulcanization itself. These moulds can be used without any surface treatment. Due to their method of production - low-pressure die casting, where the working surface quality is sufficient for production. The metal mould consists of 8 to 32 segments. The working temperature usually ranges from 150 °C to 170 °C; the working temperature can be even higher depending on additives added to the rubber material. The said material and coating resist these temperatures.

This type of moulds requires maintenance after about 2,500 to 2,700 cycles. The maintenance consists of shutting the mould down followed by cleaning thereof. The cleaning is carried out either manually, i.e. using steel or abrasive brushes, or by covering the working surface with a layer of dry ice followed by mechanical cleaning. The mechanical cleaning is carried out by fine sand blasting. Each maintenance is expensive because of the mould shutdown and also in terms of mould wear due to cleaning. The specific cleaning time cannot be accurately determined. The mould cleaning time depends on size, shape and type of tires.

However, the shutdown always takes days.

Today, the PTFE coatings are used to extend the mould service life. These coatings achieved 200% to 400% increase in duty cycle between maintenances. This contributed to significant reductions in financial costs. Thus, the number of cycles between cleaning operations increased to 10,000-12,000. The problem is still the abrasion-resistance of the coating.

### Summary of Invention

The above drawbacks are largely eliminated by the coating technology of the present invention. The coating technology consisting in PTFE nanolayer with titanium dioxide particles. Such a coating positively affects the properties of the casting moulds. The coating formed according to the present invention has a thickness of 20 to 25 µm, thereby not affecting the resulting vulcanized product. The coating can be applied to both new moulds and used moulds that need to be cleaned first. TiO₂ in an amount of 0.5 to 50% by volume mixed to PTFE has no effect on the surface roughness and increases the damage-resistance thereof.

Thus, the present invention relates to a method for producing a PTFE-based coating on aluminium alloy moulds used for rubber vulcanization for tire production, wherein
- the mould surface is degreased and decontaminated in a bath at a temperature of 50-55 °C and a pH of 11.0 to 12.5 for 2-3 minutes,
- rinsed in demineralized water at a temperature of 20-30 °C,
- the surface of the mould is coated in a bath containing up to 0.5% of hexafluorozirconium acid at a temperature of 25-30 °C and a pH of 4.8-5.2 for 1-2 minutes, followed by
- rinsing in demineralized water at a temperature of 20-30 °C and
- drying at a temperature of 110-115 °C for 20-25 minutes, characterized in that
the PTFE-based coating comprises an aqueous-based polytetrafluoroethylene dispersion, ground TiO₂ particles in an amount of 0.5 to 50 % by volume and up to 5% of non-ionic surfactant, the mould is coated in a bath containing the PTFE-based coating composition at a temperature of 60-65 °C and a pH of 7.5-8.5 for 15-16 minutes, and it is dried without rinsing at temperature of 80-120 °C for 30-40 minutes to form a coating with a thickness of 20-25 µm.

### Production of TiO₂ nanoparticles

These are rod-shaped TiO₂ nanoparticles. Procedure for the production thereof is as follows. First, a mixture of 100 ml of demineralized water and 50 ml of crushed ice was prepared in a laboratory beaker of 350 ml. Subsequently, 5 ml of ammonia used as a precursor was added thereto and the resulting solution was briefly mixed. Immediately thereafter, 4.8 g of the weighed titanyl sulphate TiOSO₄ was mixed thereto, corresponding to the maximum solubility of the substance in aqueous ammonia solution. The resulting mixture was stirred on a magnetic stirrer for several hours until room temperature was reached, with continuous pH control, which gradually decreased to pH 8 from the original pH 9 to 10 by volatilization of basic ammonia from the solution. After checking the temperature of the solution, comparable to the room temperature, the beaker with the mixture was put aside and TiOSO₄ powder was let to settle to the beaker bottom. Then, the solution was decanted and the beaker was topped up to 350 ml with demineralized water and the mixture was mixed again for 10 minutes. The operation of decanting, topping up, and mixing was repeated three times in total to ensure complete replacement of the sulphate ions dissociated from TiOSO₄ with the hydroxyl anions. After the last mixing, the solution was filtered and the remaining powder settled on the filter paper was dried and stored in a prepared container. The result substance containing metatitanic acid H₂TiO₃, formed in an ammonia precursor, was named TIO 1D. Titanium dioxide structures were only achieved after annealing the primary TIO 1D sample at high temperatures in the range of 500 to 950 °C. In this way, a very well crystallized anatase was formed.

The coating is formed throughout several successive phases. In the first step, the TiO₂ nanoparticles are prepared, followed by mould degreasing and decontamination, mould rinsing, actual phase I coating, mould rinsing, mould drying, and phase II coating and drying. Each of these steps has certain specific features. This procedure results in a uniform distribution of the TiO₂ particles of the mould surface.

In the first step, it is necessary to prepare nanoparticles from titanium dioxide tablets. They are ground using a planetary ball mill. Due to the particle size, the use of colloidal grinding is necessary in this step.

The agents used in this process are listed below. It is based on TiO₂ particles, further, alkali degreasing agent, liquid surfactants, zirconium passivating agent, polytetrafluoroethylene dispersion, nitric acid, and water-based agent containing bicarbonate and ammonium carbamate are used.

For such coating applied to the mould surface, a comparative test between the surfaces of PTFE and PTFE + TiO₂ was carried out; no difference between the coating of PTFE only and the PTFE coating enriched with TiO₂ was observed for the monitored parameters Ra, Rz, and Rt. Therefore, it can be said that the surface quality of the vulcanized rubber material remains the same.

For the PTFE+TiO₂ coating such applied, the abrasion-resistance was examined on several samples compared to the PTFE coating. The friction coefficient was measured. The test was carried out at load of 2 N, path of 10 mm, and time of 60 s. The measurement was always repeated for 5-times. The measurement results are shown in the following table. An increase in abrasion-resistance of the sample with TiO₂ can be seen.

The coating technology consisting of a combination of micro-layer and titanium dioxide nanoparticles produced specially - by a chemical process. According to the research results, this microlayer positively influences the properties of Al moulds, in terms of greater abrasion-resistance and surface non-adhesion of the coating, in the production of rubber and plastic components - up to 200 °C. The micro-coating itself increases the number of cycles between the cleaning operations of individual moulds. The assumption for prolongation of this interval is based on the increase in friction coefficient. The composite microlayer made by this method has a thickness of 20 to 25 µm, thus not affecting properties of the resulting vulcanized product. The nanocomposite layer consists of polymeric PTFE macromolecules, among which TiO₂ nanoparticles with a specially formed morphology adhere. The nanoparticles of given morphology adhere in the PTFE microlayer based on physical and chemical relations.

Thus, the microlayer thickness mentioned above is the total thickness of the nanocomposite formed by the PTFE matrix and the TiO₂ nanoparticles. The particle size reaches to several tens of nanometres.

Advantages and new findings in the use of PTFE-based nanocomposite microcoating with the addition of needle-shaped, non-annealed TiO₂ nanoparticles for coating of Al alloys.
- When using particles of the same morphology, but with the difference in thermal annealing of the nanoparticles used, there is a fundamental difference in the agglomeration of the nanoparticles used. Thermal-annealed nanoparticles cannot be used for strong agglomeration of particles resulting in strong aggregates of nanoparticles that are difficult to separate even in an ultrasonic bath. On the contrary, non-annealed particles fully meet the requirements for usage thereof in nanocomposite microlayers.
- There was no difference observed between the PTFE coating and the PTFE microcoating enriched with titanium dioxide particles. Thus, the surface roughness of a component remains virtually unchanged and it can be said that the surface quality of the vulcanized rubber material or the plastic mouldings remains the same.
- Thickness of the nanocomposite microlayer - the nanocomposite layer consists of polymeric PTFE macromolecules, among which TiO₂ nanoparticles with a specially formed morphology adhere - has thickness of 20 to 25 µm, not affecting the properties of the resulting vulcanized products or plastic mouldings.
- In order to improve the service life, the abrasion-resistance and increase the non-adhesion, TiO₂ nanoparticles of various morphology - shape are added into PTFE coatings and are tested. The nanoparticles were prepared by various technologies in order to achieve the best abrasion-resistance properties and maximum non-adhesion of the nanocomposite coating. This will form a special, purposeful universal nanocomposite. The nanocomposite contains purposefully prepared TiO₂ particles that provide the desired surface properties of a component.
- Almost six-fold increase in friction coefficient can be observed, which can confirm significant increase in abrasion-resistance of a nanocomposite-microlayer sample containing specially prepared TiO₂ nanoparticles with needle-shape morphology of the non-annealed nanoparticles.

The said coating is used to prolong significantly the use time of the mould without cleaning, i.e. increasing the cohesion. The disadvantage of the existing coating is low abrasion-resistance and surface hardness thereof. In order to improve the service life, the abrasion-resistance and increase the non-adhesion, TiO₂ nanoparticles of various morphology - shape are added into PTFE coatings and are tested. The nanoparticles were prepared by various technologies in order to achieve the best abrasion-resistance properties and maximum non-adhesion of the nanocomposite coating. This will form a special, purposeful universal nanocomposite. The nanocomposite contains purposefully prepared TiO₂ particles that provide the desired surface properties of a component.

### Examples of the Invention Embodiments

As an example of a technical solution, a mould made of Al-Si aluminium alloy, coated with the coating of the present invention to reduce adhesion and increase the abrasion-resistance, used to rubber vulcanisation for tire production can be used. The PTFE coating with TiO₂ particles forms a layer of thickness of 20 to 25 µm on the mould.

The coating is formed throughout several successive phases. In the first step, the TiO₂ nanoparticles are prepared, followed by mould degreasing and decontamination, mould rinsing, actual phase I coating, mould rinsing, mould drying, and phase II coating and drying. Each of these steps has certain specific features. This procedure results in a uniform distribution of the TiO₂ particles of the mould surface.

In the first step, it is necessary to prepare nanoparticles from titanium dioxide tablets. They are ground using a planetary ball mill. Due to the particle size, the use of colloidal grinding is necessary in this step. The grinding conditions are shown in the following table.

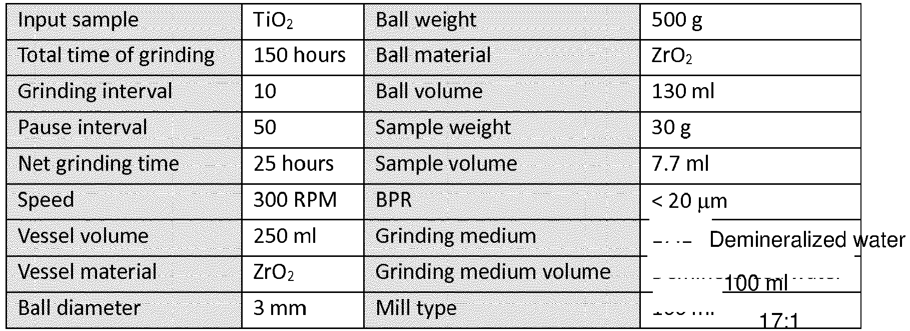

Principle of nanoparticle production.

These are rod-shaped TiO₂ nanoparticles. Procedure for the production thereof is as follows. First, a mixture of 100 ml of demineralized water and 50 ml of crushed ice was prepared in a laboratory beaker of 350 ml. Subsequently, 5 ml of ammonia used as a precursor was added thereto and the resulting solution was briefly mixed. Immediately thereafter, 4.8 g of the weighed titanyl sulphate TiOSO₄ was mixed thereto, corresponding to the maximum solubility of the substance in aqueous ammonia solution. The resulting mixture was stirred on a magnetic stirrer for several hours until room temperature was reached, with continuous pH control, which gradually decreased to pH 8 from the original pH 9 to 10 by volatilization of basic ammonia from the solution. After checking the temperature of the solution, comparable to the room temperature, the beaker with the mixture was put aside and TiOSO₄ powder was let settle to the beaker bottom. Then, the solution was decanted and the beaker was topped up to 350 ml with demineralized water and the mixture was mixed again for 10 minutes. The operation of decanting, topping up, and mixing was repeated three times in total to ensure complete replacement of the sulphate ions dissociated from TiOSO₄ with the hydroxyl anions. After the last mixing, the solution was filtered and the remaining powder settled on the filter paper was dried and stored in a prepared container. The result substance containing metatitanic acid (H₂TiO₃), formed in an ammonia precursor, was named TIO 1D. Titanium dioxide structures were only achieved after annealing the primary TIO 1D sample at high temperatures in the range of 500 to 950 °C. In this way, a very well crystallized anatase as well as a sample of anatase-rutile mixture were formed.

### Procedure

**1. Degreasing and decontamination**

| | |
|---|---|
| Bath composition: | 15 g/l P1 + 3g/l P2 + demineralized water |
| Temperature: | 50-55 °C |
| pH: | 11.0-12.5 |
| Time: | 2-3 minutes |
| Note: | The aluminium content of the bath must be below 10 g/l in the solution. |

**2. Rinse**

| | |
|---|---|
| Bath composition: | demineralized water |
| Temperature: | 20-30 °C |
| Time: | briefly |

**3. Phase I coating**

| | |
|---|---|
| Bath composition: | 40 g/l P3+ demineralized water |
| Temperature: | 25-30 °C |
| pH: | 4.8-5.2 |
| Time: | 1-2 minutes |
| Note: | pH of the bath must not exceed 5.2. P5 - A (increase in pH) and P5 - B (reduce in pH) are used to adjust the pH. |

**4. Rinse**

| | |
|---|---|
| Bath composition: | demineralized water |
| Temperature: | 20-30 °C |
| Time: | briefly |

**5. Drying**

| | |
|---|---|
| Device: | Hot-air drying oven |
| Temperature: | 110-115 °C |
| Time: | 20-25 minutes |

**6. Phase II coating**

| | |
|---|---|
| Bath composition: | 10 to 12 g/l P4 + demineralized water |
| Temperature: | 60-65 °C |
| pH: | 7.5-8.5 |
| Time: | 15-16 minutes |
| Note: | After the phase II coating, the material should not be rinsed. |

**7. Drying**

| | |
|---|---|
| Device: | Hot-air drying oven |
| Temperature: | 100 °C |
| Time: | 30-40 minutes |
| Note: | The oven must be preheated to a given temperature. |

The agents used in this process are listed below. It is based on TiO₂ particles, further, alkali degreasing agent, liquid surfactants, zirconium passivating agent, polytetrafluoroethylene dispersion, nitric acid, and water-based agent containing bicarbonate and ammonium carbamate are used.

### TiO₂ particles

The particle addition was titanium dioxide in the form of a powder ground on a planetary ball mill to nanometric scale.

### P1 preparation

Aqueous-based alkaline degreasing agent containing 30 to 50% sodium hydroxide with maximum concentration of 5% tetrasodium ethylenediaminetetraacetate. It is a yellow-coloured liquid with faint odour and density of about 1,400 kg·m⁻³ and pH of 14.

### P2 preparation

Liquid aqueous-based surfactant mixture with amine content up to 10%. It is a yellow-coloured liquid with characteristic odour and density of about 1,000 kg·m⁻³ and pH of about 9, which is miscible with water. The preparation is intended to improve degreasing in alkaline baths.

### P3 preparation

The preparation is a liquid high-performance zirconia passivating agent intended to form nanomolecular surfaces protecting various metal surfaces from corrosion. It contains up to 0.5% hexafluorozirconium acid. It is a colourless, slightly cloudy with faint odour and density of about 1,000 kg·m⁻³ and pH of 1 to 2.

### P4 preparation

Aqueous-based polytetrafluoroethylene dispersion dispersible in water containing up to 5% non-ionic surfactants. It is a white-coloured liquid with faint odour of ammonia and density of about 1,500 kg.m⁻³, pH of 9 to 10, and boiling point of 100 °C, which contains 4.5 to 6.5 g/l solids. This is a preparation for aluminium surface treatment after anodic oxidation.

### P5 ― A preparation

Aqueous-based preparation containing up to 10% nitric acid. It is a colourless liquid with specific odour and density of about 1,000 kg.m⁻³ and pH of 1, which is miscible with water. The preparation is designed to correct the pH value of a bath solution.

### P5 - B preparation

Aqueous-based preparation containing up to 10% bicarbonate and up to 10% ammonium carbamate. It is a colourless liquid with specific odour and density of 1,000 kg·m⁻³ and pH of 8 to 9, which is miscible with water. The preparation is designed to correct the pH value of a bath solution.

For such coating applied to the mould surface, a comparative test between the surfaces of PTFE and PTFE + TiO₂ was carried out; no difference between the coating of PTFE only and the PTFE coating enriched with TiO₂ was observed for the monitored parameters Ra, Rz, and Rt. Therefore, it can be said that the surface quality of the vulcanized rubber material remains the same. The arithmetic average values are shown in the following table.

| **Roughness values** | | | | | |
|---|---|---|---|---|---|
| **PTFE coating** | | | **PFTE+TIO₂ coating** | | |
| **Ra** | **Rz** | **Rt** | **Ra** | **Rz** | **Rt** |
| 1.50 | 7.93 | 11.97 | 2.304 | 13.716 | 20.092 |

For the PTFE+TiO₂ coating such applied, the abrasion-resistance was examined on several samples compared to the PFET coating. The friction coefficient was measured. The test was carried out at load of 2 N, path of 10 mm, and time of 60 s. The measurement was always repeated for 5-times. The measurement results are shown in the following table. An increase in abrasion-resistance of the sample with TiO₂ can be seen.

| **Friction coefficient values** | |
|---|---|
| **Sample with PTFE coating** | **Sample with PTFE coating + TiO₂** |
| 0.09794 | 0.13954 |

The uniform distribution of particles in the PTFE coating was monitored by TESCAN Vega 3 scanning electron microscope with BRUKER X-FLASH EDS analyser.

Zeiss SEM-FIB CrossBeamAuriga scanning electron microscope was used to analyse the sample in section by metallographic cut. The number of individual elements - Al, Si, Mg, Mn, and Fe as components of the underlying material; F, C, and O as components of Teflon coating; and Ti and O as added nanoparticles. Ca can be described as an impurity trapped on the sample during handling thereof.

Another type of electron microscope, Thermo Scientific Q250 Analytical SEM, was chosen for further analysis. It showed the same data. The EDS analysis and graphical representation of the each element content were performed.

### Industrial Applicability

The technology of coating formation with nanoparticle addition is applicable for vulcanization of rubber materials on Al-Si and Al-Mg alloys. In particular, the tire production can be mentioned as an example.

## Claims

1. Method for producing a PTFE-based coating on aluminium alloy moulds used for rubber vulcanization for tire production, wherein
- the mould surface is degreased and decontaminated in a bath at a temperature of 50― 55 °C and a pH of 11.0 to 12.5 for 2-3 minutes,
- rinsed in demineralized water at a temperature of 20―30 ° C, and wherein
- the surface of the moulds is further coated in a bath containing up to 0.5% of hexafluorozirconium acid at a temperature of 25-30 °C and a pH of 4.8-5.2 for 1-2 minutes, followed by
- rinsing in demineralized water at a temperature of 20―30 °C and
- drying at a temperature of 110-115 °C for 20―25 minutes, **characterized in that**
the PTFE-based coating comprises an aqueous-based polytetrafluoroethylene dispersion, ground TiO₂ particles in an amount of 0.5 to 50 % by volume and up to 5% of non-ionic surfactant, the mould is coated in a bath containing the PTFE-based coating composition at a temperature of 60-65 °C and a pH of 7.5-8.5 for 15-16 minutes, and it is dried without rinsing at temperature of 80-120 °C for 30-40 minutes to form a coating with a thickness of 20-25 µm.

## Patentansprüche

1. Verfahren zur Herstellung einer Beschichtung von Formen aus Aluminiumlegierungen zum Vulkanisieren von Gummi zur Herstellung von Reifen auf PTFE-Basis, bei dem
• die Oberfläche der Formen in einem Bad bei einer Temperatur von 50-55 °C mit einem pH-Wert von 11,0 bis 12,5 für 2-3 Minuten entfettet und abgebeizt,
• mit demineralisiertem Wasser mit einer Temperatur von 20-30 °C abgespült wird, und
• die Oberfläche der Formen wird weiterhin in einem Bad mit einem Gehalt von bis zu 0,5 % Hexafluorzirkonsäure mit einer Temperatur von 25-30 °C mit einem pH-Wert 4,8-5,2 für 1-2 Minuten beschichtet, dann
• mit demineralisiertem Wasser mit einer Temperatur von 20-30 °C abgespült und
• bei Temperaturen von 110 bis 115 °C für 20 bis 25 Minuten getrocknet, **gekennzeichnet dadurch, dass**
die Beschichtung auf PTFE-Basis Polytetrafluorethylen-Dispersion auf Wasserbasis, gemahlene Nanopartikel TiO₂ in einer Menge von 0,5-50 % Vol. und bis zu 0,5 % nichtionische Tenside enthält, die Formen werden in einem Bad mit einer Beschichtung auf PTFE-Basis mit einer Temperatur von 60-65 °C mit einem pH-Wert von 7,5-8,5 für 15-16 Minuten beschichtet und ohne Abspülen bei Temperaturen von 80-120 °C für 30-40 Minuten getrocknet, um eine Beschichtung in der Stärke von 20-25 µm zu bilden.

## Revendications

1. Le procédé de production du revêtement des moules aux alliages d'aluminium pour la vulcanisation du caoutchouc pour la production des pneus à la base de PTFE auquel
• la surface des moules est dégraissée et décontaminée dans un bain à la température 50-55 °C avec un pH de 11,0 à 12,5 pour la durée de 2-3 minutes,
• elle est rincée à l'eau déminéralisée à la température de 20 à 30 °C, et
• ensuite, la surface des moules est revêtue dans un bain qui contient jusqu'à 0,5 % de l'acide hexafluorozirconique à la température 25-30 °C avec un pH de 4,8 à 5,2 pour la durée de 1-2 minutes après quoi
• elle est rincée à l'eau déminéralisée à la température de 20 à 30 °C et
• elle est séchée à la température de 110 à 115 °C pour la durée de 20 à 25 minutes **caractérisé en ce que**
le revêtement à la base de PTFE contient une dispersion aqueuse de polytétrafluoroéthylène, nanoparticules moulues de TiO₂ de la quantité de 0,5 à 50 % de vol. et jusqu'à 0,5 % de la substance non ionique tensioactive, les moules sont revêtus dans le bain de base PTFE à la température de 60 à 65 °C avec un pH de 7,5 à 8,5 pour la durée de 15 de 16 minutes et séchés sans rincer à la température de 80 à 120 °C pour la durée de 30 - 40 minutes de sorte que le revêtement de l'épaisseur 20-25 µm soit créé.
